# EUROPEAN PATENT SPECIFICATION

(11) **EP 3 144 640 B1**
(45) Date of publication and mention of the grant of the patent: **19.12.2018**
(21) Application number: 15186081.4
(22) Date of filing: 21.09.2015
(51) Int. Cl.: G01D 5/24, G01D 18/00, G01P 15/125, G01P 15/18, G01P 21/00

(54) **SENSOR ARRANGEMENT AND METHOD FOR OPERATION OF A SENSOR**
SENSORANORDNUNG UND VERFAHREN ZUM BETRIEB EINES SENSORS
ENSEMBLE CAPTEUR ET PROCÉDÉ DE FONCTIONNEMENT D'UN CAPTEUR

(43) Date of publication of application: 22.03.2017
(73) Proprietor: ams AG, 8141 Premstätten (AT)
(72) Inventor: SINGAMALA, Sudhakar, 500017 Tarnaka, Hyderabad (IN); YADAGIRI, Vasanth Swaroop, 500026 Secunderabad (IN); AVALUR, Krishna Kanth, 500072 Kukatpally, Hyderabad (IN); GAJDARDZIEW, Andrzej, 8323 Krumegg (AT)
(74) Representative: Epping - Hermann - Fischer

(56) References cited:
- WO-A1-2015/128922
- DE-A1- 10 135 943

## Description

The present patent application is related to a sensor arrangement and to a method for operation of a sensor.

Sensor arrangements often comprise a sensor and a circuit for driving the sensor and measurement. The sensor may be fabricated as a micro-electro-mechanical sensor, whereas the circuit is realized by a semiconductor integration technique. Thus, the sensor and the circuit are coupled to each other by bond wires or connecting lines, for example on a housing or a printed circuit board. In safety-critical applications, the operation of the sensor arrangement has to be monitored.

Document WO 2015/128922 A1 refers to a capacitive detection apparatus. A sensor arrangement comprises a first and a second capacitive element, a driver circuit and a measurement circuit. The driver circuit provides a first and a second periodic signal to a first and to a second input terminal in two periods in a normal operation mode and provides the first periodic signal to the first input terminal in two further periods for fault diagnosis. The driver circuit provides a reference voltage to the second input terminal in the two further periods for fault diagnosis.

Document DE 101 35 943 A1 describes a capacitive physical quantity sensor. An acceleration sensor includes a sensor element having a first and a second movable electrode and a first and a second fixed electrode and a detection circuit for detecting acceleration on the basis of a variation in the difference capacitance in the sensor element. The two movable electrodes and the two fixed electrodes form two variable capacitors. A first carrier signal is applied to the first fixed electrode and a second carrier signal is applied to the second fixed electrode. The two carrier signals are inverted to each other in a measuring mode and in a diagnostic mode.

An object of the present patent application is to provide a sensor arrangement and a method for operation of a sensor such that an operation of the sensor arrangement can be monitored with little effort.

The object is solved by the subject-matter of the independent claims. Further embodiments are described in the dependent claims.

In an embodiment, a sensor arrangement comprises a sensor, a driver circuit and a measurement circuit. The sensor comprises a first and a second capacitive element, a first and a second input terminal and an output terminal. The first capacitive element is coupled between the first input terminal and the output terminal. The second capacitive element is coupled between the second input terminal and the output terminal. The driver circuit is coupled to the first and the second input terminal of the sensor. The measurement circuit is coupled to the output terminal of the sensor. Moreover, in a measurement mode, the driver circuit is configured to provide a first periodic signal to the first input terminal of the sensor and a second periodic signal to the second input terminal of the sensor. Furthermore, in a diagnostic mode, the driver circuit is configured to provide a third periodic signal to the first input terminal and not to provide a periodic signal to the second input terminal.

Advantageously, the same input and output terminals of the sensor that are used in the measurement mode are also used in the diagnostic mode. An additional connection to the sensor that is only used for diagnosis is not required. Advantageously, the switching of the sensor arrangement from the measurement mode into the diagnostic mode is achieved by changing the signals generated by the driver circuit.

In an embodiment, in the diagnostic mode, the driver circuit is configured to keep the second input terminal of the sensor floating. Thus, the second capacitive element has no influence on an output signal that is tapped at the output terminal of the sensor.

In an embodiment, the second input terminal of the sensor is free of a voltage or current applied by the driver circuit in the diagnostic mode. No signal is provided to the second input terminal of the sensor by the driver circuit in the diagnostic mode.

In an alternative embodiment, in the diagnostic mode, the driver circuit may be configured to provide a constant signal to the second input terminal. The constant signal may be zero. The constant signal may have the value of 0 Volt. Thus, the second input terminal of the sensor may be grounded by the driver circuit. The second input terminal of the sensor may be connected to a reference potential terminal or an analog ground terminal by the driver circuit in the diagnostic mode. A reference potential or ground is tapped at the reference potential terminal. An analog ground is tapped at the analog ground terminal and may be in the midst between a supply voltage and the reference potential.

In an embodiment, in the diagnostic mode, the first and the second capacitive element approximately form a capacitive voltage divider between the first input terminal of the sensor and the reference potential terminal, wherein the output terminal of the sensor is connected to the node between the first and the second capacitive element.

In an embodiment, in the diagnostic mode, since the third periodic signal is applied to the first input terminal of the sensor, an output signal can be tapped at the output terminal of the sensor. The measurement circuit can detect a non-zero output signal, when the third periodic signal is applied to the first input terminal and the connection between the driver circuit to the first input terminal of the sensor and the connection of the output terminal of the sensor to the measurement circuit are conducting. For example, these connections are not interrupted by a failure of a bond wire.

In an embodiment, the first capacitance value of the first capacitive element is approximately equal to the second capacitance value of the second capacitive element at a certain value of the parameter that is measured by the sensor. Thus, in the measurement mode, at this certain value of the parameter to be measured, the output signal at the output terminal of the sensor is approximately 0.

In an embodiment, the first and the second periodic signal have the same frequency and are shifted with a phase shift of approximately 180°. Optionally, the first and the second periodic signal are shifted with a phase shift of 180°. A difference between the first and the second capacitance value depends on the parameter to be measured by the sensor. The output signal or an absolute value of the output signal or a converter signal or a digital output signal depends on the difference between the first and the second capacitance value and, thus, is a function of the parameter to be measured by the sensor.

The frequency of the third periodic signal may be equal to the frequency of the first and the second periodic signal.

In an embodiment, the first and the second periodic signal are implemented as pulse signals. Advantageously, pulse signals can easily be generated.

Alternatively, the first and the second periodic signal may be realized as sinus signals. Advantageously, sinus signals generate less disturbances, for example, in comparison to pulse signals.

The third periodic signal may be realized as a pulse signal. The pulse height of the third periodic signal may be equal to the pulse height of the first and the second periodic signal.

The third periodic signal may be implemented as a sinus signal. The amplitude of the third periodic signal may be equal to the amplitude of the first and the second periodic signal.

In an embodiment, the third periodic signal has the same form such as the first and the second periodic signal. The number of pulses and/or the number of periods of the third periodic signal may be different from the number of pulses and/or the number of periods of the first and the second periodic signal.

In an alternative embodiment, the third periodic signal may have another form as the first and the second periodic signal. For example, the frequency of the third periodic signal may differ from the frequency of the first and the second periodic signal. Alternatively, the pulse height of the third periodic signal may differ from the pulse height of the first and the second periodic signal. Alternatively, in case of sinus periodic signals, the amplitude of the third periodic signal may differ from the amplitude of the first and the second periodic signal. Alternatively, the third periodic signal is a pulse signal and the first and the second periodic signals are sinus signals or vice versa.

In an embodiment, the first, the second and the third periodic signal are generated by means of the same excitation clock signal. The excitation clock signal may have a constant frequency.

In an embodiment, in the measurement mode, the driver circuit provides the first and the second periodic signal such that the measurement circuit measures a difference between the first and the second capacitance value.

In an embodiment, in the diagnostic mode, the driver circuit provides the third periodic signal such that the measurement circuit measures the first capacitance value. Since the first capacitance value is higher than the difference between the first and the second capacitance value, the first capacitance value can easily be detected in the diagnostic mode and a diagnostic signal can be generated.

In an embodiment, the driver circuit comprises a switching circuit having outputs coupled to the first and the second input terminal of the sensor. Optionally, the switching circuit has a first output connected to the first input terminal of the sensor and a second output connected to the second input terminal of the sensor. The switching circuit may be realized as a multiplexer.

In an embodiment, the driver circuit comprises a sensor driver that is coupled on its output side to the input side of the switching circuit. The sensor driver may have a first output connected to a first input of the switching circuit and a second output connected to a second input of the switching circuit. The sensor driver may be realized as an inverter arrangement.

The sensor driver may be designed for generating the first and the second periodic signal. Thus, the first and the second periodic signal may be tapped at the first and second output of the sensor driver. The sensor driver may be designed for generating the third periodic signal. The third periodic signal may be tapped at the first output of the sensor driver.

In an embodiment, the measurement circuit determines the digital output signal in the measurement mode. The digital output signal depends on the output signal tapped at the output terminal of the sensor. The digital output signal is a function of the parameter to be measured by the first and the second capacitive element of the sensor. A digital logic of the measurement circuit generates the digital output signal.

In an embodiment, the measurement circuit determines a diagnostic signal in the diagnostic mode. The diagnostic signal provides the information whether the first capacitive element is correctly connected.

In an embodiment, the duration of the diagnostic mode comprises a first and a second phase. In the first phase, the first capacitive element is tested as described above. In the first phase, the third periodic signal is provided to the first input terminal of the sensor. In the second phase, a further periodic signal is provided to the second input terminal of the sensor. Thus, the second capacitive element is tested during the second phase and a further diagnostic signal is generated in the second phase providing the information whether the second capacitive element is correctly connected.

In an embodiment, the measurement circuit comprises a capacitance-to-voltage converter that is abbreviated to CV converter and is coupled to the output terminal of the sensor. An input of the capacitance-to-voltage converter may be directly and permanently connected to the output terminal of the sensor. The capacitance-to-voltage converter may be implemented as a switched-capacitor circuit.

In an embodiment, the measurement circuit comprises an amplifier that is coupled to the output side of the capacitance-to-voltage converter. The amplifier may be implemented as a programmable gain amplifier. The amplifier may be realized as a switched-capacitor amplifier.

In an embodiment, the measurement circuit comprises an analog-to-digital converter coupled to the output side of the amplifier. The analog-to-digital converter, abbreviated to AD converter or ADC, generates a digital signal.

In an embodiment, the measurement circuit comprises a first comparator. A first comparator input of the first comparator is coupled to the output of the CV converter or to the output of the amplifier or to the output of the AD converter. A first reference signal is provided to a second comparator input of the first comparator. Thus, the first comparator compares a converter signal provided by the CV converter, an amplified signal provided by the amplifier or a digital signal provided by the AD converter with the first reference signal.

In an embodiment, the measurement circuit comprises a second comparator. A first comparator input of the second comparator is coupled to the output of the CV converter, to the output of the amplifier or to the output of the AD converter. A second reference signal is provided to a second comparator input of the second comparator. Thus, the second comparator compares the converter signal, the amplified signal or the digital signal provided by the AD converter with the second reference signal. The second reference signal is different from the first reference signal.

An over-range may be detected by the first comparator, whereas an under-range may be detected by the second comparator. The first comparator provides a signal that may be a pulse signal in case the sensor arrangement operates correctly. Thus, the connections between the parts of the sensor arrangement are conducting. The second comparator may provide an output signal in case the sensor arrangement does not operate correctly. For example, connections may be missing between the sensor and the measurement circuit or the driver circuit. The diagnostic signal may be generated depending on the output signal of the first comparator and the output signal of the second comparator.

In an embodiment, the sensor is realized on a first semiconductor body and the driver circuit and the measurement circuit are realized on a second semiconductor body.

In an embodiment, a method for operation of a sensor comprises the following steps, wherein the sensor comprises a first and a second capacitive element, a first and a second input terminal and an output terminal such that the first capacitive element is coupled between the first input terminal and the output terminal and the second capacitive element is coupled between the second input terminal and the output terminal: In a measurement mode, a first periodic signal is provided to the first input terminal of the sensor and a second periodic signal is provided to the second input terminal of the sensor by a driver circuit. Moreover, in a diagnostic mode, a third periodic signal is provided to the first input terminal of the sensor and a non-periodic signal or no signal is provided to the second input terminal of the sensor by the driver circuit.

In an embodiment, the second input terminal may be free of a periodic signal directly applied to it by the driver circuit in the diagnostic mode. The second input terminal may be floating in the diagnostic mode.

The sensor may be a micro-electro-mechanical systems capacitive sensor, abbreviated as MEMS capacitive sensor or MEMS sensor. The sensor connectivity diagnostic may improve the automotive safety integrity level, abbreviated as ASIL, in automotive applications.

In an embodiment, a mechanism is realized by the method to consistently and accurately diagnose the connectivity between the MEMS sensor, the driver circuit and the measurement circuit using the measurement signal path itself. Optionally, there is no need to decouple the MEMS sensor from the measurement path and to interrupt the measurement process. The driver circuit and the measurement circuit implement an integrated measurement and MEMS driver circuit.

The following description of figures may further illustrate and explain exemplary embodiments. Insofar as components, circuits and method steps correspond to one another in terms of their function in different figures, the description thereof is not repeated for each of the following figures.
- Figures 1A to 1D: show exemplary embodiments of a sensor arrangement.
- Figure 2: shows an exemplary embodiment of a driver circuit of a sensor arrangement.
- Figure 3: shows an exemplary embodiment of signals that can be tapped in a sensor arrangement.

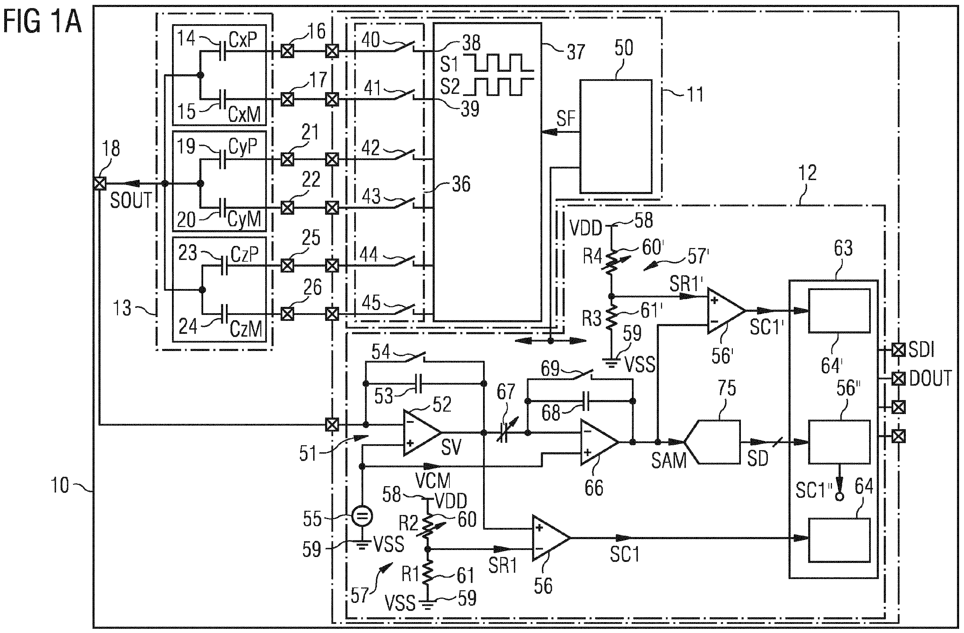

Figure 1A shows an exemplary embodiment of a sensor arrangement 10 comprising a driver circuit 11, a measurement circuit 12 and a sensor 13. The sensor 13 couples the driver circuit 11 to the measurement circuit 12. The sensor 13 is realized as a capacitive sensor. The sensor 13 is fabricated using a micro-electro-mechanical system technology.

The sensor 13 comprises a first and a second capacitive element 14, 15. The first capacitance value CxP of the first capacitive element 14 and the second capacitance value CxM of the second capacitive element 15 each depend on a parameter to be measured by the sensor 13. The first and the second capacitive element 14, 15 form a differential capacitor. If the parameter to be measured increases, one of the first and the second capacitance value CxP, CxM increases and the other of the first and the second capacitance value CxP, CxM decreases. At one value of the parameter to be measured, the first capacitance value CxP may be equal to the second capacitance value CxM. The sensor 13 may be realized as an accelerometer sensor. The parameter to be measured may be an acceleration of the sensor 13. The first and the second capacitive element 14, 15 may be sensitive to an acceleration in one direction, for example an x-direction.

The sensor 13 comprises a first and a second input terminal 16, 17 and an output terminal 18. The first capacitive element 14 is arranged between the first input terminal 16 and the output terminal 18. Correspondingly, the second capacitive element 15 is arranged between the second input terminal 17 and the output terminal 18. Moreover, the sensor 13 comprises a third and a fourth capacitive element 19, 20 and a third and a fourth input terminal 21, 22. The third capacitive element 19 couples the third input terminal 21 to the output terminal 18. Correspondingly, the fourth capacitive element 20 couples the fourth input terminal 22 to the output terminal 18. The third and the fourth capacitive element 19, 20 are also realized as a differential capacitor. The third capacitance value CyP of the third capacitive element 19 and the fourth capacitance value CyM of the fourth capacitive element 20 depend on a further parameter to be measured by the sensor 13. For example, the third and the fourth capacitive element 19, 20 are sensitive to an acceleration. The third and the fourth capacitance value CyP, CyM may depend on an acceleration in a further direction, for example in a y-direction.

Furthermore, the sensor 13 comprises a fifth and a sixth capacitive element 23, 24 and a fifth and a sixth input terminal 25, 26. The fifth capacitive element 23 couples the fifth input terminal 25 to the output terminal 18. Correspondingly, the sixth capacitive element 24 couples the sixth input terminal 26 to the output terminal 18. The fifth and the sixth capacitive element 23, 24 are also realized as a differential capacitor. The fifth capacitance value CzP of the fifth capacitive element 23 and the sixth capacitance value CzM of the sixth capacitive element 24 depend on an additional parameter to be measured by the sensor 13. For example, the fifth and the sixth capacitive element 23, 24 are sensitive to an acceleration. The fifth and the sixth capacitance value CzP, CzM may depend on an acceleration in an additional direction, for example in a z-direction.

The driver circuit 11 is coupled to the first and the second input terminal 16, 17 of the sensor 13. Moreover, the driver circuit 11 is coupled to the third and the fourth input terminal 21, 22 of the sensor 13. Additionally, the driver circuit 11 is coupled to the fifth and sixth input terminal 25, 26 of the sensor 13.

The driver circuit 11 comprises a switching circuit 36 that is connected on its output side to the first to the sixth input terminal 16, 17, 21, 22, 25, 26 of the sensor 13. Moreover, the driver circuit 11 comprises a sensor driver 37 that is coupled on the output side via the switching circuit 36 to the sensor 13. A first output 38 of the sensor driver 37 is coupled via a first switch 40 of the switching circuit 36 to the first input terminal 16 of the sensor 13. Correspondingly, a second output 39 of the sensor driver 37 is coupled via a second switch 41 of the switching circuit 36 to the second input terminal 17 of the sensor 13. Moreover, the sensor driver 37 is coupled via a third and a fourth switch 42, 43 of the switching circuit 36 to the third and the fourth input terminal 21, 22 of the sensor 13. The sensor driver 37 is coupled via a fifth and a sixth switch 44, 45 of the switching circuit 36 to the fifth and the sixth input terminal 25, 26 of the sensor 13. The sensor driver 37 may be called micro-electro-mechanical systems driver.

Additionally, the driver circuit 11 comprises a clock circuit 50. The clock circuit 50 is connected on its output side to an input of the sensor driver 37.

The measurement circuit 12 comprises a capacitance-to-voltage converter 51, abbreviated as CV converter, having an input connected to the output terminal 18 of the sensor 13 via an input terminal of the measurement circuit 12. The CV converter 51 comprises a converter amplifier 52. A converter capacitor 53 of the CV converter 51 connects an output of the converter amplifier 52 to an input of the converter amplifier 52. The CV converter 51 comprises a converter switch 54 that couples the output of the converter amplifier 52 to the input of the converter amplifier 52. The input of the converter amplifier 52 is coupled to the output terminal 18. A reference voltage source 55 is connected to a further input of the converter amplifier 52.

The measurement circuit 12 comprises a first comparator 56. A first input of the first comparator 56 is connected to the output of the converter amplifier 52 and, thus, to the output of the CV converter 51. A second input of the first comparator 56 is coupled to a first reference source 57. The first reference source 57 may be realized as a voltage divider. The voltage divider is arranged between a supply voltage terminal 58 and a reference potential terminal 59. The first reference source 57 comprises a first and a second divider resistor 60, 61. The first and/or the second divider resistor 60, 61 may be controllable. The first divider resistor 60 is arranged between the supply voltage terminal 58 and the second input of the first comparator 56. The second divider resistor 61 is arranged between the second input of the first comparator 56 and the reference potential terminal 59.

Additionally, the measurement circuit 12 comprises a digital logic 63. An output of the first comparator 56 is coupled to an input of the digital logic 63. The digital logic 63 comprises a digital counter 64 that is connected on its input side to the output of the first comparator 56.

Furthermore, the measurement circuit 12 comprises an amplifier 66 having an input coupled to the output of the CV converter 51. A coupling capacitor 67 may be arranged between the output of the CV converter 51 and the input of the amplifier 66. The amplifier 66 may be realized as a programmable gain amplifier. An amplifier capacitor 68 is arranged between an output of the amplifier 66 and the input of the amplifier 66. An amplifier switch 69 couples the output of the amplifier 66 to the input of the amplifier 66. The reference voltage source 55 is connected to a further input of the amplifier 66.

The measurement circuit 12 may comprises a further first comparator 56'. The further first comparator 56' has a first comparator input coupled to the output of the amplifier 66. A second input of the further first comparator 56' is coupled to a further first reference source 57'. The further first reference source 57' may be realized as a voltage divider. The voltage divider may be arranged between the supply voltage terminal 58 and the reference potential terminal 59. The further first reference source 57' comprises a further first and a further second divider resistor 60', 61'. The further first and/or second divider resistor 60', 61' may be controllable. The further first divider resistor 60' is arranged between the supply voltage terminal 58 and the second input of the further first comparator 56'. The further second divider resistor 61' is arranged between the second input of the further first comparator 56' and the reference potential terminal 59. An output of the further first comparator 56' is connected to a further digital counter 64' of the digital logic 63.

Alternatively, the output of the further first comparator 56' is coupled to the digital counter 64. The further digital counter 64' may be omitted. The output of the first comparator 56 and the output of the further first comparator 56' may be coupled by a multiplexer to the digital counter 64.

Additionally, the measurement circuit 12 comprises an analog-to-digital converter 75, abbreviated to AD converter. An input of the AD converter 75 is coupled to the output of the amplifier 66. An output of the AD converter 75 is coupled to an input of the digital logic 63. The digital logic 63 comprises a digital first comparator 56" that is connected on its input side to the output of the AD converter 75.

The clock circuit 50 provides an excitation clock signal SF to the sensor driver 37 and a clock signal to the analog front end such as for controlling the converter switch 54 and the amplifier switch 69. A supply voltage VDD is applied to the supply voltage terminal 58. A reference potential VSS is tapped at the reference potential terminal 59.

In a measurement mode, the sensor driver 37 generates a first and a second periodic signal S1, S2. The first periodic signal S1 is provided at the first output 38 of the sensor driver 37. Similarly, the second periodic signal S2 is provided at the second output 39 of the sensor driver 37. The second periodic signal S2 is generated with 180° out of phase relative to the first periodic signal S1. The sensor driver 37 provides the first periodic signal S1 to the first capacitive element 14 and the second periodic signal S2 to the second capacitive element 15 via the switching circuit 36. The first and the second periodic signal S1, S2 are pulse signals. An output signal SOUT can be tapped at the output terminal 18 of the sensor 13. The output signal SOUT is a function of the first and the second capacitance value CxP, CxM and of the first and the second periodic signal S1, S2.

The output signal SOUT is converted by the CV converter 51 to a converter signal SV that can be tapped at the output of the CV converter 51. The reference voltage source 55 provides an amplifier reference voltage VCM to the further input of the converter amplifier 52 and the further input of the amplifier 66. The converter signal SV is applied via the coupling capacitor 67 to the input of the amplifier 66. An amplified signal SAM can be tapped at the output of the amplifier 66 that depends on the converter signal SV. The amplified signal SAM is digitized by the AD converter 75 into a digital signal SD. The digital signal SD is provided to the digital logic 63. The digital signal SD represents a difference between the first and the second capacitance value CxP, CxM. Thus, the digital signal SD depends on the parameter to be measured by the sensor 13 and, especially, depends on the parameter to be measured by the first and the second capacitive element 14, 15. For example, the digital signal SD represents an acceleration in the x-direction. The digital logic 63 has output terminals. The digital logic 63 generates a digital output signal DOUT. The digital output signal DOUT represents an information about the acceleration.

In a diagnostic mode, the sensor driver 37 provides a third periodic signal S3 via the first switch 40 of the switching circuit 36 and the first input terminal 16 to the first capacitive element 14. The second switch 41 is kept open in the diagnostic mode. Thus, the second input terminal 17 of the sensor 13 is floating in the diagnostic mode. No voltage or current is supplied via the second input terminal 17 of the sensor 13 to the second capacitive element 15. The output signal SOUT only depends from the first capacitance value CxP and the third periodic signal S3. The converter signal SV is applied to the first input of the first comparator 56. The first reference source 57 provides a first reference signal SR1 to the second input of the first comparator 56. A comparator signal SC1 is provided at the output of the first comparator 56 depending on a comparison of the converter signal SV and the first reference signal SR1.

In case the sensor arrangement 10 is operating correctly, high pulses in the output signal SOUT are generated by the third periodic signal S3 and the first capacitive element 14. These pulses in the output signal SOUT also generate high pulses in the converter signal SV which result in pulses of the comparator signal SC1. The pulses of the comparator signal SC1 are counted by the digital counter 64. The third periodic signal S3 may obtain a number N of pulses. If the digital counter 64 also counts the number N of pulses or a number equal or higher than a threshold number M of pulses in the comparator signal SC1, then a diagnostic signal SD1 can be provided at the output of the digital logic 63 indicating that the sensor arrangement 10 is operating correctly. If no pulse or a number less than the threshold number M of pulses are counted by the digital counter 64 in the comparator signal SC1, the diagnostic signal SD1 indicates that the sensor arrangement 10 is not operating correctly.

The amplified signal SAM is provided to the further first comparator 56'. The further first comparator 56' compares the amplified signal SAM and a further first reference signal SRI' and provides a further comparator signal SC1' to the further digital counter 64'. In the diagnostic mode, the high pulses in the converter signal SV also result in high pulses in the amplified signal SAM. Pulses in the amplified signal SAM result in pulses in the further comparator signal SC1'. The pulses in the further comparator signal SC1' are counted by the further digital counter 64'.

The high values of the amplified signal SAM also result in high values of the digital signal SD. The digital signal SD is compared with an additional first reference signal SR1" by the digital first comparator 56". In the diagnostic mode, in the case that the sensor arrangement 10 is operating correctly, the digital first comparator 56" outputs an additional comparator signal SC1" that may be called ADC comparator flag ADF with the information that the digital signal SD is higher than the additional first reference signal SR1".

According to the embodiment shown in Figure 1A, the diagnostic signal SD1 can be generated using the first comparator 56 together with the digital counter 64 and using the further first comparator 56' together with the further digital counter 64' and using the digital first comparator 56". The diagnostic signal SD1 is a function of at least one of the comparator signal SC1, the further comparator signal SC1' and the additional comparator signal SC1".

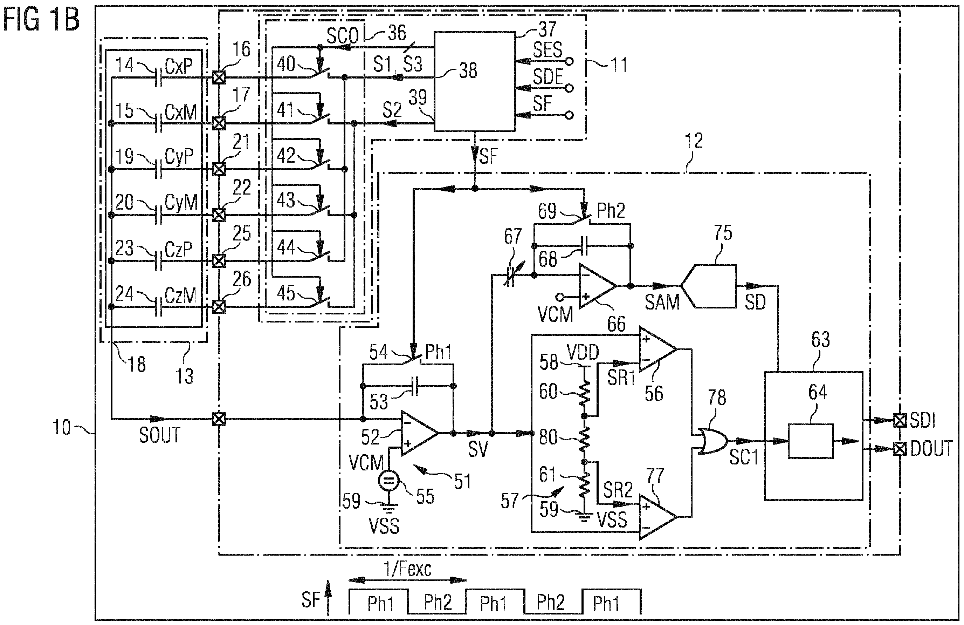

Alternatively, the further first comparator 56' and the further digital counter 64' as well as the digital first comparator 56" may be omitted. Thus, the diagnostic signal SD1 is generated by the first comparator 56 and the digital counter 64. The diagnostic signal SD1 is a function of the comparator signal SC1. This embodiment is illustrated in further detail by Figure 1B.

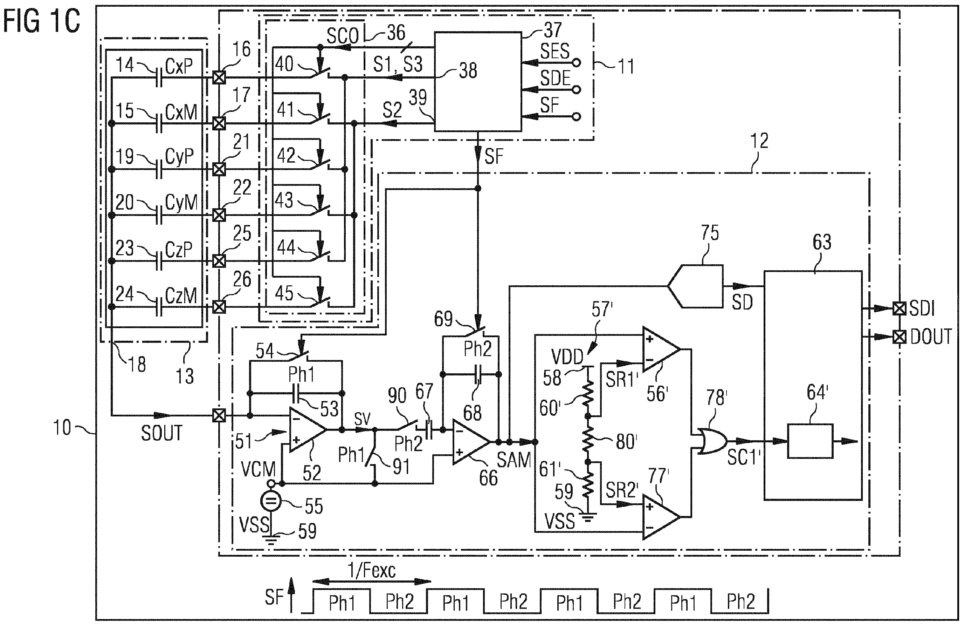

Alternatively, the first comparator 56 and the digital counter 64 as well as the digital first comparator 56" are omitted. Thus, the diagnostic signal SD1 is generated using the further first comparator 56' and the further digital counter 64'. The diagnostic signal SD1 is a function of the further comparator signal SC1'. This embodiment is illustrated in further detail by Figure 1C. Since the first comparator 56 that is connected to the output of the CV converter 51 is omitted, the further first comparator 56' can also be called "first comparator" and the further digital counter 64' can be called "digital counter".

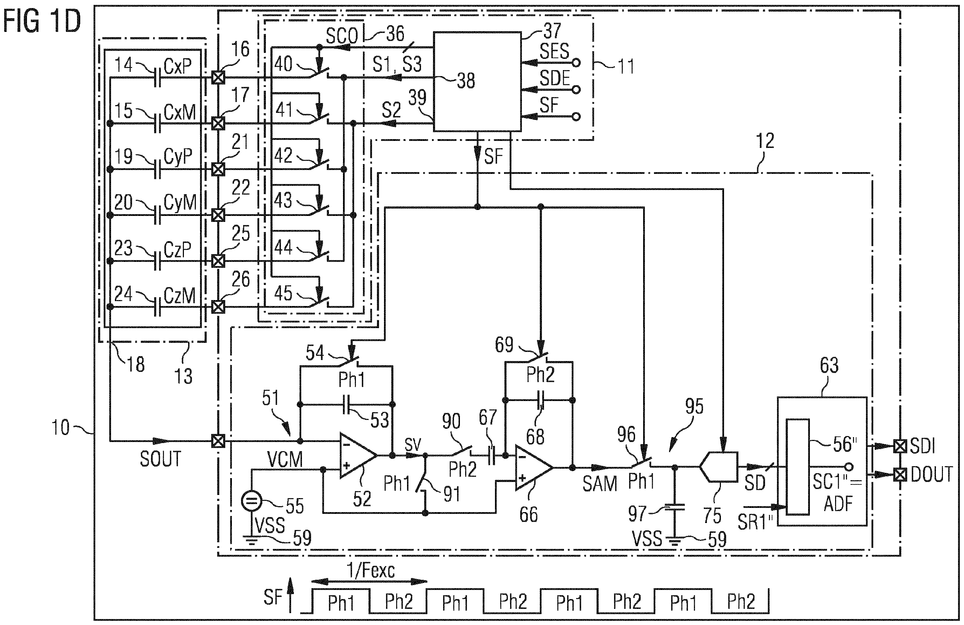

Alternatively, the comparator 56, the further comparator 56', the digital counter 64 and the further digital counter 64' are omitted. The diagnostic signal SD1 is generated using only the information provided by the digital first comparator 56". The diagnostic signal SD1 is a function of the additional comparator signal SC1". This embodiment is further illustrated by Figure 1D.

In Figure 1A, a block diagram of a three-axis capacitive MEMS accelerometer sensor 13 with integrated measurement and driver circuit 11, 12 is shown. The sensor arrangement 10 can be called MEMS based sensor device. The sensor arrangement 10 comprises two main components namely on one side the sensor 13 and on the other side the driver circuit 11 and the measurement circuit 12, called integrated measurement and driver circuit. While the electronic circuits 11, 12 are fabricated using integrated circuit process sequences (e.g. CMOS, Bipolar or BICMOS processes), the sensor 13 is a micromechanical component. The sensor 13 is fabricated using compatible micromachining processes that selectively etch away parts of a silicon wafer or add new structural layers to form the mechanical and/or electromechanical sensor 13. The sensor 13 is a MEMS sensor or a capacitive MEMS sensor. Hence the sensor 13 may be fabricated separately on a different silicon wafer. The sensor 13 and the integrated measuring and MEMS driver circuit 11, 12 may be electrically connected to each other using bond wires. In safety critical applications, which demands reliability of highest order, the electrical connectivity between the sensor 13 and measurement circuit 12 must be continuously/periodically monitored and a loss of connectivity must be reported to activate relevant safety mechanism. The sensor arrangement 10 detects the connectivity of the sensor 13 using the measuring circuit 12 itself.

The measuring signal path may remain coupled to the sensor 13 to perform the diagnostic without an interruption to the signal measurement. The physical/electrical connectivity of the sensor 13 with the measuring circuit 12 is detected using the normal measurement signal path without the need for an additional circuitry. The measurement signal path is not interrupted. The sensor arrangement 10 may not need to enter any exclusive diagnostic mode. The measurement signal path, also called measurement path, is formed by the measurement circuit 12. The measurement signal path may comprise the CV converter 51, the amplifier 66 and the AD converter 75.

In Figure 1A, a block diagram of the sensor 13 and the integrated electronics 11, 12 that measures the MEMS sensor output SOUT is illustrated. The sensor 13 may be a three-axis capacitive MEMS accelerometer sensor. The MEMS capacitive accelerometer includes a movable proof mass with capacitive elements 14, 15, 19, 20, 23, 24 suspended over the surface of a not-shown wafer through mechanical suspension to a reference frame. The deflection of the proof mass is measured using at least a differential capacitor that consists of independent fixed plates and plates attached to the moving mass. Acceleration deflects the moving mass and unbalances the at least one differential capacitor resulting in an output signal SOUT or a digital output signal DOUT whose amplitude is proportional to acceleration. For a multichannel accelerometer each capacitor pair is arranged perpendicular to the other pair, for example to measure acceleration in the corresponding X, Y and Z axis.

When the sensor 13 is subjected to acceleration then there is a change in the capacitance values CxP, CxM, CyP, CyM, CzP, CzM between the input terminals 16, 17, 21, 22, 25, 26 and the output terminal 18 depending on the direction of the acceleration. The output terminal 18 is also called C0 pin or common node. The integrated electronic circuit 12 measures the capacitance output of the sensor 13 at the output terminal 18. The output terminal 18 is connected to the switched-capacitor based CV converter 51 followed by the switched-capacitor programmable gain amplifier 66 and the AD converter 75 which digitizes the amplified signal SAM. The output signals CV, SAM of the CV converter 51 and the amplifier 66 are monitored for under or over range (saturation / programmable threshold crossing) using the two comparator blocks 56, 56' for each.

The connectivity of the sensor 13 is detected as follows: During the measurement mode, the fixed plates pairs having the capacitance values CxP and CxM, CyP and CyM as well as CzP and CzM are driven by 180° out of phase square wave excitation signals S1, S2 with a frequency = Fexc in a sequence as shown in Figure 1A. When there is no acceleration, the complementary capacitors of each axis are balanced and the charge generated on each capacitive element 14, 15, 19, 20, 23, 24 due to the excitation signals S1, S2 cancels out and zero charge is transferred to the converter capacitor 53 connected to the output terminal 18. However, during acceleration the value of complementary capacitive elements 14 and 15, 19 and 20, 23 and 24 changes and said elements will no longer be balanced. For example, a difference in the order of few femto Farads, depending on the sensor type and magnitude of acceleration, may be observed.

The excitation signals S1, S2 cause a charge proportional to the difference in the capacitance to be transferred to the converter capacitor 53. The charge is converted to a voltage by the CV converter 51, amplified by the programmable gain amplifier 66 in every cycle of the excitation signal S1, S2 and digitized by the AD converter 75. The comparators 56, 56' are able to indicate positive and negative saturation / threshold crossing (under or over range) of the converter signal SV and of the amplified signal SAM respectively on every excitation clock cycle. If the converter signal SV or the amplified signal SAM crosses a programmable set threshold value realized by the first reference signal SR1, SR1' or saturate (in positive or negative direction), then the corresponding comparator signal SC1, SC1' is asserted high. For monitoring the digital signal SD of the AD converter 75, the digital first comparator 56" with a programmable threshold SR1" is implemented.

Figure 1B shows an exemplary embodiment of the sensor arrangement 10 that is a further development of the embodiment shown in Figure 1A. The first output 38 of the sensor driver 37 is coupled via the first switch 40 to the first input terminal 16 of the sensor 13 and via the third switch 42 to the third input terminal 21 of the sensor 13 as well as via the fifth switch 44 to the fifth input terminal 25 of the sensor 13. Correspondingly, the second output 39 of the sensor driver 37 is coupled via the second switch 41 to the second input terminal 17 of the sensor 13, via the fourth switch 43 to the fourth input terminal 22 of the sensor 13 and via the sixth switch 45 to the sixth input terminal 26 of the sensor 13. The switching circuit 36 comprises a first and a second multiplexer. The first multiplexer comprises the first, third and fifth switch 40, 42, 44. The second multiplexer comprises the second, fourth and sixth switch 41, 43, 45.

The sensor driver 37 provides control signals SCO to the control terminals of the first to the sixth switch 40 to 45. The control signals SCO are designed such that a maximum of one switch of the first, third and fifth switch 40, 42, 44 is in a conducting state at a point of time. Correspondingly, the control signals SCO are provided such that the maximum of one switch of the second, fourth and sixth switch 41, 43, 45 is in a conducting state at a point of time. The sensor driver 37 receives the excitation clock signal SF. The excitation clock signal SF has a frequency in the kilohertz range. The first and the second periodic signal S1, S2 are derived from the excitation clock signal SF.

The sensor driver 37 receives a diagnosis enable signal SDE. The diagnosis enable signal SDE sets the sensor driver 37 from the measurement mode into the diagnostic mode and back. Moreover, the sensor driver 37 receives an electrode selecting signal SES. An electrode selecting signal SES determines which of the first to the sixth switch 40 to 45 is closed for a diagnosis of the connections to the first to the sixth capacitive element 14, 15, 19, 20, 23, 24. An output of the sensor driver 37 is connected to control terminals of the converter switch 54 and of the amplifier switch 69.

The measurement circuit 12 comprises a second comparator 77. A first comparator input of the second comparator 77 is coupled to the output of the CV converter 51. A second comparator input of the second comparator 77 is coupled to the first reference source 57. The first reference source 57 is realized as a voltage divider that comprises three resistors 60, 61, 80 that are connected in series. The first divider resistor 60 couples the supply voltage terminal 58 to a third divider resistor 80. The second voltage divider 61 couples the reference potential terminal 59 to the third divider resistor 80. A tap between the first and the third divider resistor 60, 80 is connected to the second comparator input of the first comparator 56. A tap between the third and the second divider resistor 80, 61 is connected to a second comparator input of the second comparator 77.

The first comparator input of the first comparator 56 is realized as a non-inverting input, whereas the second comparator input of the first comparator 56 is implemented as an inverting input. The first comparator input of the second comparator 77 is implemented as an inverting input and the second comparator input of the second comparator 77 is realized as a non-inverting input. The first reference source 57 provides a second reference signal SR2 to the second input of the second comparator 77. The second reference signal SR2 may be lower than the first reference signal SR1.

The measurement circuit 12 comprises a logic circuit 78 that couples an output of the second comparator 77 and the output of the first comparator 56 to the digital counter 64. The logic circuit 78 may be implemented as an OR gate. The pulses provided by the first and the second comparator 56, 77 are combined by the logic circuit 78 and the combined pulses form the comparator signal SC1 that is counted by the digital counter 64. When the converter signal SV comprises pulses with a high positive value, the first comparator 56 also repeats pulses which are fed through the logic circuit 78 to the digital counter 64. In the case of high positive pulses of the converter signal SV, the second comparator 77 does not provide any pulse as a comparator signal. In the case that the converter signal SV obtains pulses with a high negative value, the second comparator 77 generates an output signal having pulses.

At the bottom of Figure 1B, the excitation clock signal SF having the frequency Fexc is shown. The excitation clock signal SF has a first clock phase Ph1 and a second clock phase Ph2. The excitation clock signal SF is provided to the control terminal of the converter switch 54 that is closed in the first clock phase Ph1 and opened in the second phase Ph2. The sum of the duration of the first clock phase Ph1 and the duration of the second clock phase Ph2 is 1/Fexc. The durations of the first and the second clock phase Ph1, Ph2 are equal.

In Figure 1B, a block diagram of a sensor connectivity check using the converter signal SV is illustrated. The MEMS connectivity detection is performed by the voltage comparator 56 on the output of CV convertor 51 to improve ASIL for automotive applications. The comparator 56 on the output along with the digital counter 64 will detect the connectivity status of each MEMS electrode of the sensor 13 (corresponding to X, Y, Z axis) to the measurement circuit 12 and the driver circuit 11. The first to the sixth input terminals 16, 17, 21, 22, 25, 26 can also be named electrodes of the sensor 13. Also the output terminal 18 can be named an electrode of the sensor 13.

The converter signal CV is a pulsed waveform on the common mode voltage. The same CV converter 51 which is used for the measurement of acceleration from the capacitive MEMS sensor 13 is used for the sensor connectivity test also.

Two comparators 56, 77 are connected to monitor the converter signal CV that is a voltage (for over range and under range). The comparator threshold voltages are realized by the first and the second reference signals SRI, SR2 and are programmable with the resistive divider 57. The variable reference signals SRI, SR2 are useful to support various MEMS sensors 13 with different zero bias capacitance. The zero bias capacitance is the absolute capacitance of each sensor electrode without acceleration or excitation bias i.e., initial electrode capacitance.

During sensor connectivity diagnostic execution, if the sensor electrode 16, 17, 21, 22, 25, 26 is connected to the measurement circuit 12, then based on the reference signals SR1, SR2 the output of the comparators 56, 77 is a pulsed waveform (square wave) because of the clocked converter signal SV. The output of the comparators 56, 77 is connected to the digital counter circuit 64 with a programmable count threshold value M. Based on the count reaching the threshold M the digital logic 63 decides the status of the sensor connectivity and provides the diagnostic signal SD1.

Figure 1C shows an exemplary embodiment of the sensor arrangement 10 that is a further development of the embodiments shown in Figures 1A and 1B. As shown in Figure 1C, the further first comparator 56' is coupled to the output of the amplifier 66. Moreover, a further second comparator 77' is also coupled to the output of the amplifier 66. The further reference voltage source 57' shown in Figure 1C is implemented in the same way as the reference voltage source 57 shown in Figure 1B. The further first and the further second comparator 56', 77' are connected to the output of the amplifier 66 and, therefore, are coupled to the output of the CV converter 51 via the amplifier 66. However, the further first and the further second comparator 56', 77' are not directly connected to the output of the CV converter 51.

The measurement circuit 12 comprises a first transfer switch 90 that couples the output of the CV converter 51 to the coupling capacitor 67. The measurement circuit 12 comprises a second transfer switch 91 that couples the output of the CV converter 51 to the reference voltage source 55. Moreover, control terminals of the first and the second transfer switch 90, 91 are connected to an output of the sensor driver 37 and receive the excitation clock signal SF. The first transfer switch 90 is in a conducting state in the first clock phase Ph1, whereas the second transfer switch 91 is in a conducting state in the second phase Ph2.

In Figure 1C, a block diagram of a sensor connectivity check using the amplified signal SAM is illustrated. The MEMS connectivity detection (to improve ASIL for automotive application) uses the voltage comparator 56' on the output side of the programmable gain amplifier 66. The first comparator 56' on the output of the amplifier 66 along with the digital counter 64' detects the connectivity status of each MEMS electrode of the sensor (corresponding to X, Y, Z axis) to the driver circuit 11 and the measurement circuit 12.

The amplified signal SAM is a pulsed waveform on the common mode voltage and its magnitude is based on the capacitance value of the sensor 13 and the gain. The same CV converter 51 and amplifier 66 which are used for the measurement of acceleration from the capacitive MEMS sensor 13 are used for sensor connectivity test also. Two comparators 56', 77' are connected to monitor the amplified signal SAM that is a voltage (for over range and under range). The first and the second reference signal SRI, SR2 also called comparator threshold voltages are programmable with the resistive divider 57'. The variable reference signals SRI, SR2 are useful to support various MEMS sensors 13 with different zero bias capacitance. The zero bias capacitance is the absolute capacitance of each sensor electrode without acceleration or excitation bias, for example the initial electrode capacitance.

During sensor connectivity diagnostic execution, if the input terminals 16, 17, 21, 22, 25, 26 and the output terminal 18 and, thus the capacitive elements 14, 15, 19, 20, 23, 24 are connected to the driver circuit 11 and the measurement circuit 12, then based on the reference signals SRI, SR2 the output of the further first and further second comparator 56', 77' is a pulsed waveform (square wave) because of the clocked amplified signal SAM. The output of the comparators 56', 77' is connected to the digital counter 64' with the programmable count threshold value M. Based on the count reaching the threshold value M, the digital logic 63 decides the status of the sensor connectivity.

Figure 1D shows an exemplary embodiment of the sensor arrangement 10 which is a further development of the embodiments shown in Figures 1A to 1C. The measurement circuit 12 is free from an analog comparator connected to the output of the CV converter 51 or to the output of the amplifier 66. The comparison is performed in the digital domain by the digital logic 63. Thus, the digital logic 63 comprises the digital first comparator 56" that is connected to the output of the AD converter 75. The AD converter 75 is implemented as a 16 bit converter. The sensor driver 37 provides a high-frequency clock signal to the AD converter 75. The digital first comparator 56" receives the additional first reference signal SR1".The additional first reference signal SR1" is a digital signal. The additional first reference signal SR1" may be a 16 bit signal. The digital first comparator 56" generates a digital comparator signal SC1". The digital comparator signal SC1" can be implemented as an ADC threshold flag ADF.

The measurement circuit 12 comprises a sampling circuit 95. The sampling circuit 95 couples the output of the amplifier 66 to the input of the AD converter 75. The sampling circuit 95 comprises a sampling switch 96 and a sampling capacitor 97. The sampling capacitor 97 couples the input of the AD converter 75 to the reference potential terminal 59. The sampling switch 96 couples the output of the amplifier 66 to the input of the AD converter 75. A control terminal of the sampling switch 96 is connected to the output of the sensor driver 37. The excitation clock signal SF is provided to the control terminal of the sampling switch 96.

A clock input of the AD converter 75 is connected to a high frequency clock output of the sensor driver 37. The additional first reference signal SRI" as provided to the digital first comparator 56" may obtain a high value and a low value such that the digital signal SD is compared with a high value and a low value one after another. Thus, pulses with a positive polarity and pulses with a negative polarity can be detected by the AD converter 75 and the digital first comparator 56".

In Figure 1D, a sensor connectivity check using the digital signal SD provided by the AD converter 75 is performed. The MEMS connectivity detection (to improve ASIL for automotive application) with the digital first comparator 56" is based on the output of the AD converter 75 with a predefined digital threshold value SR1".The digital first comparator 56" on the output side of the AD converter 75 detects the connectivity status of each MEMS electrode of the sensor 13 (corresponding to X, Y, Z axis) to the measurement circuit 12 and the MEMS driver circuit 11.

The output of the AD converter 75 is a 16-bit code whose magnitude is based on the output of the capacitance-to-voltage conversion and PGA gain stage. The threshold value SR1" for the digital first comparator 56" is programmable. This is useful to support various MEMS sensors 13 with different zero bias capacitance. The analog front end, abbreviated AFE, and the AD converter 75 work on different clocks which are derived from the system clock.

To perform the three-axis sensor connectivity test at least six measurements of the AD converter 75 are required and six cycles of the ADC measurement do not result in a valid measurement for the acceleration. In this case only one measurement of the ADC 75 is used to decide the status of the sensor connectivity of one electrode or terminal. It is reliable as the AD converter 75 has a built-in-filter which will eliminate spurious glitches or spikes and an additional filtering may not be required.

The diagnostic can be enabled whenever the connectivity check is to be performed or it can be configured to be performed automatically at a programmable interval of time. In both cases the measurement path is not interrupted.

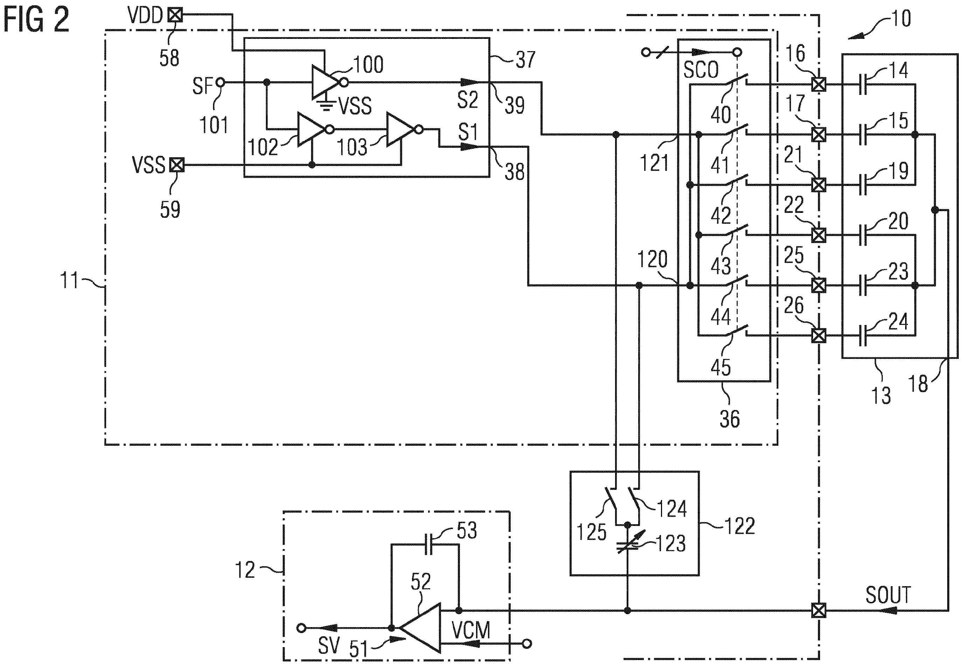

Figure 2 shows an exemplary embodiment of the driver circuit 11 that can be inserted in the embodiments of the sensor arrangement 10 of Figures 1A to 1D. The sensor driver 37 is realized as an inverter arrangement. The sensor driver 37 is connected on its input side to the supply voltage terminal 58 and the reference potential terminal 59. The sensor driver 37 comprises a first inverter 100. The first inverter 100 is coupled between a clock input 101 and the second output 39 of the sensor driver 37. The clock input 101 is also coupled to the first output 38 of the sensor driver 37. The sensor driver 37 comprises a second and a third inverter 102, 103 that are connected in series between the clock input 101 and the first output 38 of the sensor driver 37. The first to the third inverter 100, 102, 103 are supplied by connections to the supply voltage terminal 58 and the reference potential terminal 59. The excitation clock signal SF is provided to the clock input 101. The first and the third periodic signal S1, S3 are equal to the excitation clock signal SF. The second periodic signal S2 is inverted in respect to the excitation clock signal SF. Thus, the second periodic signal S2 is inverted in respect to the first periodic signal S1.

Moreover, the sensor arrangement 10 comprises a capacitor circuit 122 that couples the driver circuit 11 to the measurement circuit 12. The capacitor circuit 122 comprises a circuit capacitor 123 and a first and a second circuit switch 124, 125. A terminal of the circuit capacitor 123 is connected to the input of the CV converter 51. The circuit capacitor 123 may be realized as a variable capacitor. A capacitance value of the circuit capacitor 123 may be set by a control signal. The first circuit switch 124 couples the first output 38 of the sensor driver 37 to a second terminal of the circuit capacitor 123. The second circuit switch 125 couples the second output 39 of the sensor driver 37 to the second terminal of the circuit capacitor 123.

In the diagnostic mode, the connections to the first capacitive element 14 are tested in a first phase. The switching circuit 36 sets the first switch 40 into a conducting state and the second to the sixth switch 41 to 45 in a non-conducting state. Thus, the second to the sixth input terminal 17, 21, 22, 25, 26 of the sensor 13 are floating. Therefore, the second periodic signal S2 has no influence on the second to the sixth capacitive element 15, 19, 20, 23, 24. The first periodic signal S1 is provided to the first input 120 of the switching circuit 37 and, thus, to the first input terminal 16 via the conducting first switch 40. The third periodic signal S3 is realized by the first periodic signal S1.

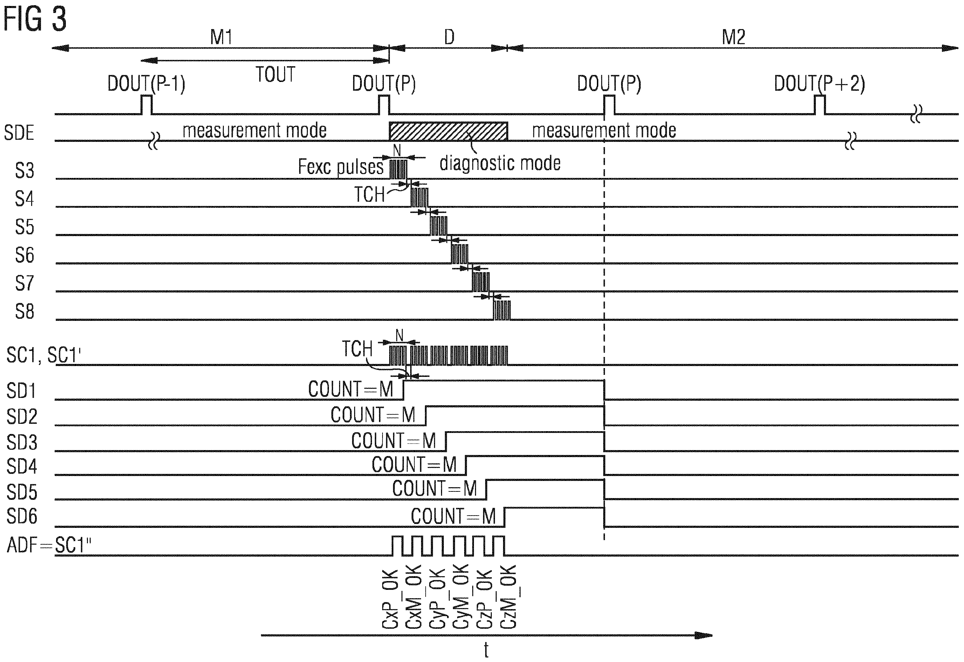

In the diagnostic mode in a second phase for testing of the second capacitive element 15, the switching circuit 36 is controlled such that the first and the third to the sixth switch 40, 42 to 45 are in a non-conducting state and the second switch 41 is in a conducting state. Thus, the first and the third to the sixth input terminal 16, 21, 22, 25, 26 of the sensor 13 are in a floating state. The first periodic signal S1 does not have any influence on the first to the sixth capacitive elements 14, 15, 19, 20, 23, 24. The second periodic signal S2 is provided to the second input 121 of the switching circuit 36 and, thus, to the second input terminal 17 via the conducting second switch 41. A further periodic signal S4, shown in Figure 3, is realized by the second periodic signal S2.

In the measurement mode, the switching circuit 36 sets the first and the second switch 40, 41 into a conducting state and the third to the sixth switch 42 to 45 in a non-conducting state. Thus, the third to the sixth input terminal 21, 22, 25, 26 of the sensor 13 are floating. The first periodic signal S1 is provided to the first input terminal 16 via the conducting first switch 40. The second periodic signal S2 is provided to the second input terminal 17 via the conducting second switch 41.

The same excitation clock signal SF that is used to excite the driver circuit 11 in the measurement mode is also used to excite the driver circuit 11 in the diagnostic mode. There is no separate generation of the third periodic signal S3. The first and the second periodic signal S1, S2 are generated in the measurement mode and the diagnostic mode by the sensor driver 37. The switching circuit 36 is set such that, in the measurement mode, the first and the second periodic signal S1, S2 are provided to the first and the second input terminal 16, 17 of the sensor 13 and, in the diagnostic mode, the first periodic signal S1, that is called the third periodic signal S3 in the diagnostic mode, is provided to the first input terminal 16 of the sensor 13 and the second input terminal 17 of the sensor 13 is kept floating.

When the sensor arrangement 10 enters the diagnostic mode, the first and the second periodic signals S1, S2 may be reset and restarted. This is performed to know the correct phase and to count the number of cycles being sent by the driver circuit 11 to the sensor 13.

Figure 3 shows an exemplary embodiment of the signals of the sensor arrangements 10 illustrated in Figures 1A to 1D and 2. In Figure 3, the waveform shows the timing sequence for checking the sensor connectivity. The signals are shown as a function of a time t. The sensor arrangement 10 is in a first measurement phase M1, then in a diagnostic phase D, then in a second measurement phase M2. The diagnostic phase D is between a first and a second measurement phase M1, M2. As shown in Figure 3, the diagnosis enable signal SDE triggers the start of the diagnostic phase D. In the first and in the second measurement phase M1, M2, the sensor arrangement 10 is in the measurement mode. In the diagnostic phase D, the sensor arrangement 10 is in the diagnostic mode.

In the first and the second measurement phase M1, M2, the AD converter 75 generates the digital signal SD that is provided as the digital output signal DOUT at one of the outputs of the digital logic 63. The digital output signal DOUT is provided periodically with a period TOUT. The period TOUT is a period of a channel measurement data throughput rate. The frequency for providing the digital output signal DOUT is constant.

In the first measurement phase M1, the digital output signals DOUT(P-1) and DOUT(P) are provided. Since in the diagnostic phase D, the digital signal SD of the AD converter 75 does not represent the parameter to be measured by the sensor 13, the last digital output signal DOUT(P) provided before the start of the diagnostic phase D is repeated again in the second measurement phase M2. Thus, values of the digital output signal DOUT are available for further digital processing. After that a new digital output signal DOUT(P+2) is generated by the sensor arrangement 10.

In the first phase of the diagnostic phase D, the third periodic signal S3 having the number N of pulses is provided to the first capacitive element 14. Then, further periodic signals S4 to S8, shown in Figure 3, having the number N of pulses are provided to the second capacitive element 15 and up to the sixth capacitive element 24. There is a time gap TCH between the end of the last pulse provided to the first capacitive element 14 and the start of the first pulse provided to the second capacitive element 15. Thus, in the first phase, the second phase and a third to a sixth phase of the diagnostic mode for testing of the first to the sixth capacitive element 14, 15, 19, 20, 23, 24, the switching circuit 36 is controlled such that only one of the first to the sixth switch 40 to 45 is in a conducting state and only one of the first to the sixth input terminal 16, 17, 21, 22, 25, 26 of the sensor 13 receives a periodic signal S3 to S8, namely the third periodic signal S3 or a further periodic signal S4 to S8 directly via the switching circuit 36. The further periodic signal S4 is equal to the second periodic signal S2. The further periodic signals S5 to S8 are equal to the first or the second periodic signal S1, S2.

In case the sensor arrangement 10 operates correctly, the comparator signal SC1 also shows the number N of pulses, when the number N of pulses are provided to the first capacitive element 14. Furthermore, the comparator signal SC1 may show the number N of pulses during the test of the second to the sixth capacitive element 15, 19, 20, 21, 24.

The digital counter 64 counts pulses in the comparator signal SC1. When the digital counter 64 has been counted a threshold number M of pulses, the diagnostic signal SD1 for the first capacitive element 14 SD1 obtains a value indicating that the connections to the first capacitive element 14 are correct. The threshold number M is a threshold count for asserting a connectivity OK flag. The threshold number M of pulses is equal or less than the number of pulses N. When the second to the sixth capacitive element 15, 19, 20, 23, 24 are tested, further diagnostic signals SD2 to SD6 indicating the diagnosis of the second to the sixth capacitive element 15, 19, 20, 23, 24 are generated. These diagnostic signals SD2 to SD6 obtain a value indicating that the connections to the respective capacitive elements are correct when the digital counter 64 counts at least the threshold number M of pulses in the comparator signal SC1.

In the last line, the ADC comparator flag ADF is shown. If the connections to the first to the sixth capacitive element 14, 15, 19, 20, 23, 24 are correct, the ADC comparator flag ADF is generated with a predetermined value, for example, as shown in Figure 3 with the logical value 1.

In Figure 3, the signals are illustrated that can be tapped in the sensor arrangement 10 shown in Figure 1A. The diagnosis phase D is repeated with a periodicity. Thus, the periodicity of performing the sensor connectivity test is predetermined.

As mentioned above, in the sensor arrangement 10 as shown in Figure 1B, the comparator signal SC1 is generated as a function of the converter signal SV. The further comparator signal SC1' and the ADC comparator flag ADF are not generated in the sensor arrangement 10 shown in Figure 1B. However, the comparator signal SC1 is sufficient to generate the diagnostic signals SD1 to SD6 representing a diagnosis of the connections to the first to the sixth capacitive element 14, 15, 19, 20, 23, 24.

As illustrated in Figure 1C, the further comparator signal SC1' is generated as a function of the amplified signal SAM. The comparator signal SC1 and the ADC comparator flag ADF are not generated in the sensor arrangement 10 shown in Figure 1C. However, the further comparator signal SC1' is sufficient to generate the diagnostic signals SD1 to SD6 representing a diagnosis of the connections to the first to the sixth capacitive element 14, 15, 19, 20, 23, 24.

As illustrated in Figure 1D, the ADC comparator flag ADF is generated as a function of the digital signal SD at the output of the AD converter 75. The comparator signal SC1 and the further comparator signal SC1' are not generated in the sensor arrangement 10 as shown in Figure 1D. However, the ADC comparator flag ADF is sufficient to generate the diagnostic signals SD1 to SD6 representing a diagnosis of the connections to the six capacitive elements 14, 15, 19, 20, 23, 24.

In the connectivity diagnostic mode, the signal path is maintained such as in the measurement mode but the excitation scheme of the capacitive elements is changed. Each capacitive element 14, 15, 19, 20, 23, 24 of the sensor 13 is driven individually with the excitation clock signal S3 to S8 one after the other for a pre-defined period (N cycles of Fexc excitation clock) with the same polarity as in the normal measurement mode. No other electrode is connected and driven including the complementary electrode of the axis pair.

During the diagnostic phase D, the capacitance values CxP, CxM, CyP, CyM, CzP, CzM of the sensor 13 and the capacitance value of the converter capacitor 53 will act as charge amplifier. Due to this excitation the charge equivalent to the absolute capacitance of the sensor 13 is transferred to the converter capacitor 53 instead of the difference between the complementary pair of capacitive elements. The relatively large value of the capacitance values CxP, CxM, CyP, CyM, CzP, CzM (compared to ΔC during normal acceleration measurement) causes the output signals of the CV converter 51, the amplifier 66 and the AD converter 75 (depending on the gain) to saturate or cross the programmable set threshold (of the output monitoring comparators). Consequently, the comparator signals SC1, SC1' resulting from the output signals of the CV converter 51 and the amplifier 66 toggle with the excitation clock frequency Fexc. The digital first comparator 56" connected to the AD converter 75 asserts an over range or under range warning flag ADF based on the polarity of the capacitive elements 14, 15, 19, 20, 23, 24.

Hence, if one of the capacitive elements 14, 15, 19, 20, 23, 24 is connected, the comparators 56, 56', 77, 77' at the output of the CV converter 51 and the output of the amplifier 66 will toggle and appear like a clock and the digital first comparator 56" at the output of the AD converter 75 will assert a warning flag ADF. If the capacitive elements 14, 15, 19, 20, 23, 24 are disconnected then there is no toggle on the comparator (comparator signals SC1, SC1' have the logical value 0) and the ADC comparator warning flag ADF is not asserted. The comparators 56, 56', 77, 77' detect both positive and negative saturation / threshold crossing of the converter signal SV and the amplified signal SAM to account for the polarity inversion at the axes.

In this mode, as mentioned above, the third periodic signal S3 and the further periodic signals S4 to S8 obtain N cycles of excitation clock to drive the selected capacitive element 14, 15, 19, 20, 23, 24 and the number of pulses of the comparator signal SC1, SC1' are counted and compared with the expected value M (where M ≤ N). In case of a disconnected sensor electrode or capacitive element 14, 15, 19, 20, 23, 24, the count would be zero. The value of M and the frequency of running this diagnostic is chosen based on the reliability requirements, type of the sensor 13 and connection between the sensor 13 and the measurement circuit 12. The comparator pulses are counted and a sensor disconnected flag SD1 is raised if the expected count is not reached.

The selection of the electrode or of the capacitive element 14, 15, 19, 20, 23, 24, the digital count value and the measurement of the acceleration are shown in Figure 3. When performing the connectivity diagnostic, the acceleration measurement may not be valid for one data-period and the acceleration measurement for X, Y, Z channels for the duration of this diagnostic is a repeat of previous cycle measured data for further signal processing. The sensor 13 is not disconnected from the measurement path.

Advantageously, the comparator signal SC1, SC1' is monitored for a count M instead of a single pulse. This inherently acts as a digital filter and avoids false indications of discontinuity, increasing the reliability of the diagnostic.

The comparator output pulse count can be implemented on the output of the CV converter 51 or the amplifier 66 or the AD converter 75. This feature helps to adapt the mechanism for any type of the sensor 13 making it sensor independent. It also increases the flexibility of implementation. The use of digital implementation provides a deterministic pass or fail result for performing the diagnostic without the effect of variation in process, temperature and voltage. It simplifies the implementation while increasing the accuracy and consistency of the results as compared to a fully analog implementation.

The concept of monitoring the PGA output (with adjustable gain) makes the implementation independent of the type and sensitivity of the sensor 13, for example for a sensor whose absolute capacitance value (zero bias capacitance) is small, the CV converter 51 may not saturate or cross the set threshold. In such cases the gain of the amplifier 66 can be dynamically configured to cause saturation or threshold crossing for a converter signal SV equivalent to electrode's absolute capacitance. The gain of the amplifier 66 may be different in the measurement mode and in the diagnostic mode. Similar to the amplifier 66, the digital first comparator 56" at the output of the AD converter 75 can also be used with the same effect. The use of a programmable digital count number N and threshold number M offers programmability, flexibility and makes the implementation sensor independent. The digital counters 64, 64', which are used as integrators, will act as lowpass filters and eliminate false triggers due to spurious spikes. It can be seamlessly used for any type of capacitive based sensor 13 not restricted to accelerometer in particular or MEMS in general. The measurement signal path need not be decoupled for running the diagnostic. The measurement path is not interrupted. The third periodic signal S3 implements an excitation signal in the diagnostic mode or a diagnostic excitation signal.

Alternatively, the third periodic signal S3 and the further periodic signals S4 to S8 are other signals apart from the first and the second periodic signal S1, S2. The diagnostic excitation signals S3 to S8 could also be other pulsed signals different from the first and the second periodic signal S1, S2.

### Reference Numerals

- 10: sensor arrangement
- 11: driver circuit
- 12: measurement circuit
- 13: sensor
- 14: first capacitive element
- 15: second capacitive element
- 16: first input terminal
- 17: second input terminal
- 18: output terminal
- 19: third capacitive element
- 20: fourth capacitive element
- 21: third input terminal
- 22: fourth input terminal
- 23: fifth capacitive element
- 24: sixth capacitive element
- 25: fifth input terminal
- 26: sixth input terminal
- 36: switching circuit
- 37: sensor driver
- 38: first output
- 39: second output
- 40: first switch
- 41: second switch
- 42: third switch
- 43: fourth switch
- 44: fifth switch
- 45: sixth switch
- 50: clock circuit
- 51: capacitance-to-voltage converter
- 52: converter amplifier
- 53: converter capacitor
- 54: converter switch
- 55: reference voltage source
- 56, 56', 56": first comparator
- 57, 57': first reference source
- 58: supply voltage terminal
- 59: reference potential terminal
- 60, 60': first divider resistor
- 61, 61': second divider resistor
- 63: digital logic
- 64, 64': digital counter
- 66: amplifier
- 67: coupling capacitor
- 68: amplifier capacitor
- 69: amplifier switch
- 75: analog-to-digital converter
- 77, 77': second comparator
- 78, 78': logic circuit
- 80, 80': third divider resistor
- 90: first transfer switch
- 91: second transfer switch
- 95: sampling circuit
- 96: sampling switch
- 97: sampling capacitor
- 100: first inverter
- 101: clock input
- 102: second inverter
- 103: third inverter
- 120: first input
- 121: second input
- 122: capacitor circuit
- 123: circuit capacitor
- 124: first circuit switch
- 125: second circuit switch
- ADF: ADC comparator flag
- DOUT: digital output signal
- Ph1: first clock phase
- Ph2: second clock phase
- SAM: amplified signal
- SB1: first bias signal
- SB2: second bias signal
- SC1, SC1', SC1": comparator signal
- SC3: first clock signal
- SC4: second clock signal
- SD: digital signal
- SDE: diagnosis enable signal
- SD1 to SD6: diagnostic signal
- SCO: control signal
- SES: electrode selecting signal
- SF: excitation clock signal
- SOUT: output signal
- SR1, SR1', SR1": first reference signal
- SR2, SR2': second reference signal
- SV: converter signal
- S1: first periodic signal
- S2: second periodic signal
- S3: third periodic signal
- S4 - S8: further periodic signal
- t: time
- TOUT: period of measurement
- VCM: amplifier reference voltage
- VDD: supply voltage
- VHCP: reference voltage
- VSS: reference potential

## Claims

1. Sensor arrangement, comprising:
- a sensor (13) comprising a first and a second capacitive element (14, 15), a first and a second input terminal (16, 17) and an output terminal (18), wherein the first capacitive element (14) is coupled between the first input terminal (16) and the output terminal (18) and the second capacitive element (15) is coupled between the second input terminal (17) and the output terminal (18),
- a driver circuit (11) that comprises a sensor driver (37) coupled to the first and the second input terminal (16, 17) of the sensor (13) and
- a measurement circuit (12) coupled to the output terminal (18) of the sensor (13), wherein, in a measurement mode, the driver circuit (11) is configured to provide a first periodic signal (S1) to the first input terminal (16) and a second periodic signal (S2) to the second input terminal (17) and,
in a diagnostic mode, the driver circuit (11) is configured to provide a third periodic signal (S3) to the first input terminal (16),
**characterized in**
**that** in the diagnostic mode, the driver circuit (11) is configured to keep the second input terminal (17) floating by keeping the second input terminal (17) disconnected from the sensor driver (37).

2. Sensor arrangement according to Claim 1,
wherein the first and the second periodic signal (S1, S2) have the same frequency and are shifted with a phase shift of approximately 180 degree.

3. Sensor arrangement according to Claims 1 or 2,
wherein the first, the second and the third periodic signal (S1, S2, S3) are implemented as pulse signals.

4. Sensor arrangement according to one of Claims 1 to 3,
wherein in the measurement mode, the driver circuit (11) is configured to provide the first and the second periodic signal (S1, S2) such that the measurement circuit (12) measures a difference between the first capacitance value (CxP) of the first capacitive element (14) and the second capacitance value (CxM) of the second capacitive element (15).

5. Sensor arrangement according to one of Claims 1 to 4,
wherein in the diagnostic mode, the driver circuit (11) is configured to provide the third periodic signal (S3) such that the measurement circuit (12) measures the first capacitance value (CxP) of the first capacitive element (14).

6. Sensor arrangement according to one of Claims 1 to 5,
wherein the driver circuit (11) comprises
- a switching circuit (36) having outputs (38, 39) coupled to the first and the second input terminal (16, 17) of the sensor (13), and
- the sensor driver (37) coupled on its output side to the input side of the switching circuit (36).

7. Sensor arrangement according to one of Claims 1 to 6,
wherein the measurement circuit (12) is configured to determine a digital output signal (DOUT) in the measurement mode and at least a diagnostic signal (SD1) in the diagnostic mode.

8. Sensor arrangement according to one of Claims 1 to 7,
wherein the measurement circuit (12) comprises
- a capacitance-to-voltage converter (51) coupled to the output terminal (18) of the sensor (13),
- an amplifier (66) coupled to the output side of the capacitance-to-voltage converter (51), and
- an analog-to-digital converter (75) coupled to the output side of the amplifier (66).

9. Sensor arrangement according to Claim 8,
wherein the measurement circuit (12) comprises a first comparator (56, 56', 56") having
- a first comparator input coupled to the output of the capacitance-to-voltage converter (51) or to the output of the amplifier (66) or to the output of the analog-to-digital converter (75) and
- a second comparator input to which a first reference signal (SR1, SR1', SR1") is provided.

10. Sensor arrangement according to Claim 9,
wherein the measurement circuit (12) comprises a second comparator (77, 77') having
- a first comparator input coupled to the output of the capacitance-to-voltage converter (51) or to the output of the amplifier (66) and
- a second comparator input to which a second reference signal (SR2, SR2') is provided.

11. Method for operation of a sensor,
the sensor (13) comprising a first and a second capacitive element (14, 15), a first and a second input terminal (16, 17) and an output terminal (18), wherein the first capacitive element (14) is coupled between the first input terminal (16) and the output terminal (18) and the second capacitive element (15) is coupled between the second input terminal (17) and the output terminal (18), wherein, in a measurement mode, a first periodic signal (S1) is provided to the first input terminal (16) of the sensor (13) and a second periodic signal (S2) is provided to the second input terminal (17) of the sensor (13) by a driver circuit (11) and, in a diagnostic mode, a third periodic signal (S3) is provided to the first input terminal (16) of the sensor (13),
**characterized in**
**that** in the diagnostic mode, no signal is provided to the second input terminal (17) of the sensor (13) by the driver circuit (11) such that the second input terminal (17) is floating by keeping the second input terminal (17) disconnected from a sensor driver (37) of the driver circuit (11).

## Patentansprüche

1. Sensoranordnung, aufweisend:
- einen Sensor (13), der ein erstes und ein zweites kapazitives Element (14, 15), einen ersten und einen zweiten Eingangsanschluss (16, 17) und einen Ausgangsanschluss (18) umfasst, wobei das erste kapazitive Element (14) zwischen den ersten Eingangsanschluss (16) und den Ausgangsanschluss (18) gekoppelt ist und das zweite kapazitive Element (15) zwischen den zweiten Eingangsanschluss (17) und den Ausgangsanschluss (18) gekoppelt ist,
- eine Treiberschaltung (11), die einen Sensortreiber (37) aufweist, der mit dem ersten und zweiten Eingangsanschluss (16, 17) des Sensors (13) gekoppelt ist, und
- eine Messschaltung (12), die mit dem Ausgangsanschluss (18) des Sensors (13) gekoppelt ist, wobei die Treiberschaltung (11) in einer Messbetriebsart dazu ausgelegt ist, ein erstes periodisches Signal (S1) an den ersten Eingangsanschluss (16) und ein zweites periodisches Signal (S2) an den zweiten Eingangsanschluss (17) zu liefern, und
die Treiberschaltung (11) in einer Diagnosebetriebsart dazu ausgelegt ist, ein drittes periodisches Signal (S3) an den ersten Eingangsanschluss (16) zu liefern, **dadurch gekennzeichnet, dass**
die Treiberschaltung (11) in der Diagnosebetriebsart dazu ausgelegt ist, den zweiten Eingangsanschluss (17) potentialfrei zu halten, indem der zweite Eingangsanschluss (17) vom Sensortreiber (37) getrennt gehalten wird.

2. Sensoranordnung nach Anspruch 1,
wobei das erste und das zweite periodische Signal (S1, S2) dieselbe Frequenz aufweisen und mit einer Phasenverschiebung von ungefähr 180 Grad verschoben sind.

3. Sensoranordnung nach Anspruch 1 oder 2,
wobei das erste, das zweite und das dritte periodische Signal (S1, S2, S3) als Impulssignale implementiert sind.

4. Sensoranordnung nach einem der Ansprüche 1 bis 3,
wobei in der Messbetriebsart die Treiberschaltung (11) dazu ausgelegt ist, das erste und zweite periodische Signal (S1, S2) so bereitzustellen, dass die Messschaltung (12) eine Differenz zwischen dem ersten Kapazitätswert (CxP) des ersten kapazitiven Elements (14) und dem zweiten Kapazitätswert (CxM) des zweiten kapazitiven Elements (15) misst.

5. Sensoranordnung nach einem der Ansprüche 1 bis 4,
wobei in der Diagnosebetriebsart die Treiberschaltung (11) dazu ausgelegt ist, das dritte periodische Signal (S3) so bereitzustellen, dass die Messschaltung (12) den ersten Kapazitätswert (CxP) des ersten kapazitiven Elements (14) misst.

6. Sensoranordnung nach einem der Ansprüche 1 bis 5,
wobei die Treiberschaltung (11) aufweist:
- einen Schaltkreis (36) mit Ausgängen (38, 39), die mit den ersten und zweiten Eingangsanschluss (16, 17) des Sensors (13) gekoppelt sind, und
- den Sensortreiber (37), der auf seiner Ausgangsseite mit der Eingangsseite des Schaltkreises (36) gekoppelt ist.

7. Sensoranordnung nach einem der Ansprüche 1 bis 6,
wobei die Messschaltung (12) dazu ausgelegt ist, ein digitales Ausgangssignal (DOUT) in der Messbetriebsart und mindestens ein Diagnosesignal (SD1) in der Diagnosebetriebsart zu bestimmen.

8. Sensoranordnung nach einem der Ansprüche 1 bis 7,
wobei die Messschaltung (12) aufweist:
- einen Kapazitäts-/Spannungswandler (51), der mit dem Ausgangsanschluss (18) des Sensors (13) gekoppelt ist,
- einen Verstärker (66), der mit der Ausgangsseite des Kapazitäts-/Spannungswandlers (51) gekoppelt ist, und
- einen Analog/Digital-Wandler (75), der mit der Ausgangsseite des Verstärkers (66) gekoppelt ist.

9. Sensoranordnung nach Anspruch 8,
wobei die Messschaltung (12) einen ersten Komparator (56, 56', 56") umfasst, der Folgendes aufweist:
- einen ersten Komparatoreingang, der mit dem Ausgang des Kapazitäts-/Spannungswandlers (51) oder mit dem Ausgang des Verstärkers (66) oder mit dem Ausgang des Analog/Digital-Wandlers (75) gekoppelt ist und
- einen zweiten Komparatoreingang, dem ein erstes Referenzsignal (SR1, SR1', SR1") bereitgestellt wird.

10. Sensoranordnung nach Anspruch 9,
wobei die Messschaltung (12) einen zweiten Komparator (77, 77') umfasst, der Folgendes aufweist:
- einen ersten Komparatoreingang, der mit dem Ausgang des Kapazitäts-/Spannungswandlers (51) oder mit dem Ausgang des Verstärkers (66) gekoppelt ist, und
- einen zweiten Komparatoreingang, dem ein zweites Referenzsignal (SR2, SR2') bereitgestellt wird.

11. Verfahren zum Betreiben eines Sensors,
wobei der Sensor (13) ein erstes und ein zweites kapazitives Element (14, 15), einen ersten und einen zweiten Eingangsanschluss (16, 17) und einen Ausgangsanschluss (18) umfasst, wobei das erste kapazitive Element (14) zwischen den ersten Eingangsanschluss (16) und den Ausgangsanschluss (18) gekoppelt ist und das zweite kapazitive Element (15) zwischen den zweiten Eingangsanschluss (17) und den Ausgangsanschluss (18) gekoppelt ist,
wobei in einer Messbetriebsart ein erstes periodisches Signal (S1) an den ersten Eingangsanschluss (16) des Sensors (13) und ein zweites periodisches Signal (S2) an den zweiten Eingangsanschluss (17) des Sensors (13) durch eine Treiberschaltung (11) geliefert wird, und
in einer Diagnosebetriebsart ein drittes periodisches Signal (S3) an den ersten Eingangsanschluss (16) des Sensors (13) geliefert wird,
**dadurch gekennzeichnet, dass**
in der Diagnosebetriebsart kein Signal an den zweiten Eingangsanschluss (17) des Sensors (13) durch die Treiberschaltung (11) geliefert wird, so dass der zweite Eingangsanschluss (17) potentialfrei ist, indem der zweite Eingangsanschluss (17) von einem Sensortreiber (37) der Treiberschaltung (11) getrennt gehalten wird.

## Revendications

1. Agencement de capteur, comprenant :
- un capteur (13) comprenant un premier et un deuxième élément capacitif (14, 15), une première et une deuxième borne d'entrée (16, 17) et une borne de sortie (18), sachant que le premier élément capacitif (14) est couplé entre la première borne d'entrée (16) et la borne de sortie (18) et le deuxième élément capacitif (15) est couplé entre la deuxième borne d'entrée (17) et la borne de sortie (18),
- un circuit pilote (11) qui comprend un pilote de capteur (37) couplé à la première et à la deuxième borne d'entrée (16, 17) du capteur (13) et
- un circuit de mesure (12) couplé à la borne de sortie (18) du capteur (13),
sachant que, dans un mode de mesure, le circuit pilote (11) est configuré pour fournir un premier signal périodique (S1) à la première borne d'entrée (16) et un deuxième signal périodique (S2) à la deuxième borne d'entrée (17) et,
dans un mode de diagnostic, le circuit pilote (11) est configuré pour fournir un troisième signal périodique (S3) à la première borne d'entrée (16),
**caractérisé en ce que**
dans le mode de diagnostic, le circuit pilote (11) est configuré pour maintenir la deuxième borne d'entrée (17) flottante en maintenant la deuxième borne d'entrée (17) déconnectée du pilote de capteur (37).

2. Agencement de capteur selon la revendication 1,
sachant que le premier et le deuxième signal périodique (S1, S2) ont la même fréquence et sont décalés à raison d'un décalage de phase d'environ 180 degrés.

3. Agencement de capteur selon la revendication 1 ou 2, sachant que le premier, le deuxième et le troisième signal périodique (S1, S2, S3) sont implémentés comme signaux impulsionnels.

4. Agencement de capteur selon l'une des revendications 1 à 3,
sachant que, dans le mode de mesure, le circuit pilote (11) est configuré pour fournir le premier et le deuxième signal périodique (S1, S2) de telle sorte que le circuit de mesure (12) mesure une différence entre la première valeur de capacité (CxP) du premier élément capacitif (14) et la deuxième valeur de capacité (CxM) du deuxième élément capacitif (15).

5. Agencement de capteur selon l'une des revendications 1 à 4,
sachant que, dans le mode de diagnostic, le circuit pilote (11) est configuré pour fournir le troisième signal périodique (S3) de telle sorte que le circuit de mesure (12) mesure la première valeur de capacité (CxP) du premier élément capacitif (14).

6. Agencement de capteur selon l'une des revendications 1 à 5,
sachant le circuit pilote (11) comprend
- un circuit de commutation (36) présentant des sorties (38, 39) couplées à la première et à la deuxième borne d'entrée (16, 17) du capteur (13), et
- le pilote de capteur (37) couplé de son côté sortie au côté entrée du circuit de commutation (36).

7. Agencement de capteur selon l'une des revendications 1 à 6,
sachant que le circuit de mesure (12) est configuré pour déterminer un signal de sortie numérique (DOUT) dans le mode de mesure et au moins un signal de diagnostic (SD1) dans le mode de diagnostic.

8. Agencement de capteur selon l'une des revendications 1 à 7,
sachant que le circuit de mesure (12) comprend
- un convertisseur capacité-tension (51) couplé à la borne de sortie (18) du capteur (13),
- un amplificateur (66) couplé au côté sortie du convertisseur capacité-tension (51), et
- un convertisseur analogique-numérique (75) couplé au côté sortie de l'amplificateur (66).

9. Agencement de capteur selon la revendication 8,
sachant que le circuit de mesure (12) comprend un premier comparateur (56, 56', 56") présentant
- une première entrée de comparateur couplée à la sortie du convertisseur capacité-tension (51) ou à la sortie de l'amplificateur (66) ou à la sortie du convertisseur analogique-numérique (75) et
- une deuxième entrée de comparateur à laquelle un premier signal de référence (SR1, SR1', SR1") est fourni.

10. Agencement de capteur selon la revendication 9,
sachant que le circuit de mesure (12) comprend un deuxième comparateur (77, 77') présentant
- une première entrée de comparateur couplée à la sortie du convertisseur capacité-tension (51) ou à la sortie de l'amplificateur (66) et
- une deuxième entrée de comparateur à laquelle un deuxième signal de référence (SR2, SR2') est fourni.

11. Procédé de fonctionnement d'un capteur,
le capteur (13) comprenant un premier et un deuxième élément capacitif (14, 15), une première et une deuxième borne d'entrée (16, 17) et une borne de sortie (18), sachant que le premier élément capacitif (14) est couplé entre la première borne d'entrée (16) et la borne de sortie (18) et le deuxième élément capacitif (15) est couplé entre la deuxième borne d'entrée (17) et la borne de sortie (18),
sachant que, dans un mode de mesure, un premier signal périodique (S1) est fourni à la première borne d'entrée (16) du capteur (13) et un deuxième signal périodique (S2) est fourni à la deuxième borne d'entrée (17) du capteur (13) par un circuit pilote (11) et,
dans un mode de diagnostic, un troisième signal périodique (S3) est fourni à la première borne d'entrée (16) du capteur (13),
**caractérisé en ce que**
dans le mode de diagnostic, aucun signal n'est fourni à la deuxième borne d'entrée (17) du capteur (13) par le circuit pilote (11) de telle sorte que la deuxième borne d'entrée (17) soit flottante en maintenant la deuxième borne d'entrée (17) déconnectée d'un pilote de capteur (37) du circuit pilote (11).
